# FASCICULE DE BREVET EUROPEEN

(11) **EP 1 039 419 B1**
(45) Date de publication et mention de la délivrance du brevet: **10.07.2002**
(21) Numéro de dépôt: 00400719.1
(22) Date de dépôt: 15.03.2000
(51) Int. Cl.: G07C 5/10, G07C 3/00

(54) **Procédé et système de téléchargement d'un fichier dans un calculateur de véhicule automobile**
Verfahren und System zur Datenfernübertragung zum Bordrechner eines Kraftfahrzeuges
Method and system for remote data transmission to an on-board computer of a motor vehicle

(30) Priorité: 25.03.1999 FR 9903750
(43) Date de publication de la demande: 27.09.2000
(73) Titulaire: Peugeot Citroen Automobiles SA, 92200 Neuilly sur Seine (FR)
(72) Inventeur: Lopez, Thierry, 78700 Conflans Sainte Honorine (FR)
(74) Mandataire: Habasque, Etienne Joel Jean-François

(56) Documents cités:
- DE-A- 4 334 859
- US-A- 5 321 619
- US-A- 5 473 540
- US-A- 5 781 125

## Description

La présente invention concerne un procédé et un système de téléchargement d'un fichier dans un calculateur de véhicule automobile, sur une ligne de montage de celui-ci.

On a déjà développé dans l'état de la technique, des procédés et des systèmes de téléchargement de fichiers de ce type dans des calculateurs de véhicules automobiles.

De façon générale, de tels systèmes comportent des outils de téléchargement dans lesquels sont stockés les fichiers à télécharger dans le calculateur (voire par exemple US-A-5 321 619).

Au cours du montage du véhicule, l'outil de téléchargement est raccordé d'une façon ou d'une autre au calculateur, ce qui permet de télécharger le fichier dans celui-ci.

Cependant, la taille des fichiers à télécharger est telle que ces opérations de téléchargement sont relativement longues, ce qui se traduit notamment par des réductions des cadences de production des véhicules.

Le but de l'invention est donc de résoudre ces problèmes.

A cet effet, l'invention a pour objet un procédé de téléchargement d'un fichier dans un calculateur de véhicule automobile, sur une ligne de montage de celui-ci, caractérisé en ce qu'il comporte les étapes suivantes :
- on compresse le fichier,
- on télécharge ce fichier compressé dans le calculateur, lors du passage du véhicule dans un poste de la ligne de montage du véhicule, et
- on déclenche la décompression du fichier dans le calculateur, lors du passage du véhicule dans un autre poste de la ligne de montage du véhicule.

Selon un autre aspect, l'invention a également pour objet un système pour la mise en oeuvre de ce procédé.

L'invention sera mieux comprise à l'aide de la description qui va suivre, donnée uniquement à titre d'exemple et faite en se référant aux dessins annexés, sur lesquels :
- la Fig.1 représente un organigramme illustrant un procédé de téléchargement selon l'invention; et
- la Fig.2 représente un schéma synoptique illustrant la structure d'un système selon l'invention.

Le procédé de téléchargement selon l'invention permet donc de télécharger un fichier dans un calculateur de véhicule automobile, sur une ligne de montage de celui-ci.

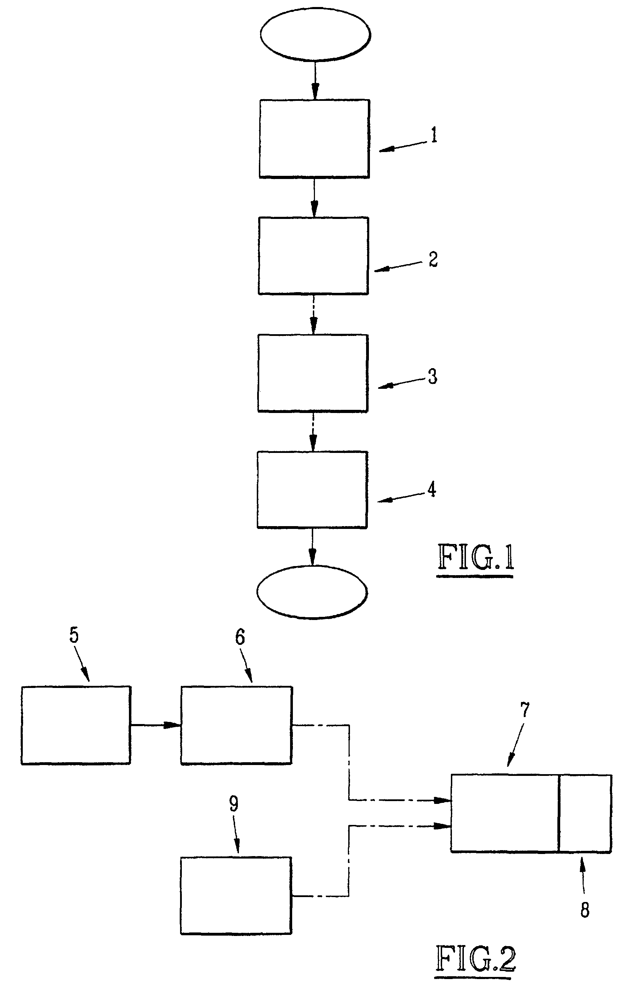

Ce fichier est donc tout d'abord préparé comme cela est illustré par l'étape 1 sur la figure 1.

Ensuite, ce fichier est compressé comme cela est illustré par l'étape 2 sur cette figure, à l'aide d'un utilitaire de compression de type classique.

Des nombreux utilitaires de ce type sont en effet connus dans l'état de la technique et permettent de réduire la taille d'un fichier avec des taux de compression pouvant atteindre par exemple 85%.

On conçoit alors que ce fichier compressé peut être chargé très rapidement, par exemple lors de l'étape 3 illustrée sur cette figure 1, dans le calculateur lors du passage du véhicule dans un poste de la ligne de montage de celui-ci.

La taille de ce fichier compressé étant réduite, le temps requis pour cette opération de téléchargement est également réduit.

Ceci permet alors également de réduire le temps d'immobilisation du véhicule dans ce poste de la ligne de montage.

Le déclenchement de la décompression de ce fichier dans le calculateur est alors réalisé, au cours d'une étape désignée par la référence générale 4 sur cette figure 1, lors du passage du véhicule dans un autre poste de la ligne de montage de ce véhicule, cet autre poste pouvant par exemple être un poste de contrôle de celui-ci.

En effet, le déclenchement de la décompression du fichier n'est pas réalisé immédiatement après le téléchargement de ce fichier compressé dans le calculateur, pour éviter là encore d'immobiliser le véhicule trop longtemps.

Cette opération de décompression peut en effet être réalisée en temps masqué lors du passage du véhicule dans d'autres postes de la ligne de montage de celui-ci et notamment lors du passage de ce véhicule dans un poste de contrôle de celui-ci.

Ce déclenchement de l'opération de décompression peut être obtenu par la voie d'une simple requête de diagnostic depuis un outil de contrôle installé dans cet autre poste.

On a représenté sur la figure 2, la structure générale d'un système de téléchargement selon l'invention.

De façon classique, le fichier à télécharger est stocké par exemple en mémoire désignée par la référence générale 5 sur cette figure, et associée à un outil de déchargement 6 de structure classique, qui est adapté pour être raccordé au calculateur du véhicule désigné par la référence générale 7, lors du passage de ce véhicule dans un poste de la ligne de montage de celui-ci.

Ce raccordement peut par exemple être un raccordement filaire par l'intermédiaire de connecteurs complémentaires.

Une fois ce raccordement effectué, un opérateur déclenche le téléchargement du fichier de l'outil de téléchargement 6 dans le calculateur 7 et plus particulièrement dans une mémoire 8 de celui-ci.

Une fois cette opération de téléchargement terminée, le véhicule quitte ce poste de la ligne de montage en direction des postes suivants de celle-ci.

Au cours du passage du véhicule dans l'un des autres postes de la ligne de montage du véhicule, on déclenche l'opération de décompression du fichier dans le calculateur.

Comme cela a été indiqué précédemment, ceci peut être obtenu par exemple à l'aide d'un outil de contrôle désigné par la référence générale 9 adapté pour être raccordé au calculateur 7 et pour émettre à destination de celui-ci, une requête de déclenchement de la décompression du fichier.

On conçoit alors que cette structure permet de réduire les périodes d'immobilisation du véhicule dans les postes de travail de la ligne de montage, ce qui permet d'augmenter les cadences de production des véhicules.

Il va de soi bien entendu que différents modes de réalisation de ce procédé et de ce système peuvent être envisagés et que par exemple différents formats de fichiers peuvent être envisagés.

## Revendications

1. Procédé de téléchargement d'un fichier dans un calculateur de véhicule automobile, sur une ligne de montage de celui-ci, **caractérisé en ce qu'**il comporte les étapes suivantes :
- on compresse (en 2) le fichier (1),
- on télécharge (en 3) ce fichier compressé dans le calculateur (7), lors du passage du véhicule dans un poste de la ligne de montage de celui-ci, et
- on déclenche (en 4) la décompression du fichier dans le calculateur, lors du passage du véhicule dans un autre poste de la ligne de montage de celui-ci.

2. Procédé selon la revendication 1, **caractérisé en ce que** l'autre poste de la ligne de montage est un poste de contrôle du véhicule et **en ce que** le déclenchement de la décompression du fichier est obtenu par émission d'une requête de déclenchement à l'aide d'un outil de contrôle du véhicule (9).

3. Système de téléchargement d'un fichier dans un calculateur de véhicule automobile, sur une ligne de montage de celui-ci, **caractérisé en ce qu'**il comporte
- des moyens (5,6) de compression du fichier,
- des moyens (5,6) de téléchargement de ce fichier compressé dans le calculateur (7), lors du passage du véhicule dans un poste de la ligne de montage du véhicule,
- des moyens (9) de déclenchement de la décompression du fichier dans le calculateur, lors du passage du véhicule dans un autre poste de la ligne de montage du véhicule.

4. Système selon la revendication 3, **caractérisé en ce que** les moyens (9) de déclenchement de la décompression du fichier comprennent un outil de contrôle du véhicule (9).

## Patentansprüche

1. Verfahren für die Fernübertragung von Daten in den Bordrechner eines Kraftfahrzeuges, das sich auf einem Montageband befindet,
**dadurch gekennzeichnet, dass**
es folgende Schritte umfasst:
- die Datei (1) wird (im Schritt 2) komprimiert,
- die komprimierten Daten werden (im Schritt 3) in den Rechner (7) ferngeladen, während das Fahrzeug einen Posten auf dem Montageband des Fahrzeugs durchläuft, und
- die Dekompression der Daten in dem Rechner wird (im Schritt 4) ausgelöst, während das Fahrzeug einen anderen Posten des Montagebandes des Fahrzeugs durchläuft.

2. Verfahren nach Anspruch 1,
**dadurch gekennzeichnet, dass**
der andere Posten des Montagebandes ein Kontrollposten ist, und dadurch, dass die Auslösung der Dekompression der Datei mittels einer Abfrage für die Auslösung mit Hilfe eines Kontrollgeräts (9) erreicht wird.

3. System für die Datenfernübertragung in den Bordrechner eines Kraftfahrzeugs, das sich auf einem Montageband befindet,
**dadurch gekennzeichnet, dass**
es folgendes aufweist:
- Mittel (5, 6) für die Kompression der Datei,
- Mittel (5, 6) für die Fernübertragung der komprimierten Datei in den Rechner (7), während das Fahrzeug einen Posten des Montagebandes durchläuft,
- Mittel (9) für die Auslösung der Dekompression der Datei in dem Rechner, während das Fahrzeug einen anderen Posten des Montagebandes des Fahrzeugs durchläuft.

4. System nach Anspruch 3,
**dadurch gekennzeichnet, dass**
die Mittel (9) für die Auslösung der Dekompression der Datei ein Kontrollgerät (9) des Fahrzeugs enthalten.

## Claims

1. Method of downloading a file into a computer of a motor vehicle, on an assembly line of the latter, **characterized in that** it comprises the following steps:
- the file (1) is compressed (in 2),
- this compressed file is downloaded (in 3) into the computer (7), whilst the vehicle is passing through a station of the assembly line of the latter, and
- the decompression of the file in the computer is triggered (in 4), whilst the vehicle is' passing through another station of the assembly line of the latter.

2. Method according to Claim 1, **characterized in that** the other station of the assembly line is a station for the checking of the vehicle and **in that** the decompression of the file is triggered by the transmission of a triggering request by means of a tool for checking the vehicle (9).

3. System for downloading a file into a computer of a motor vehicle, on an assembly line of the latter, **characterized in that** it comprises:
- means (5, 6) of compressing the file,
- means (5, 6) of downloading this compressed file into the computer (7), whilst the vehicle is passing through a station of the assembly line of the vehicle,
- means (9) of triggering the decompression of the file in the computer, whilst the vehicle is passing through another station of the assembly line of the vehicle.

4. System according to Claim 3, **characterized in that** the means (9) of triggering the decompression of the file comprise a tool for checking the vehicle (9).
